# EUROPEAN PATENT SPECIFICATION

(11) **EP 3 499 944 B1**
(45) Date of publication and mention of the grant of the patent: **07.07.2021**
(21) Application number: 17839024.1
(22) Date of filing: 31.05.2017
(51) Int. Cl.: H04W 48/06, H04W 48/12, H04W 48/16, H04W 84/04

(54) **RELAY DEVICE AND RELAY METHOD**
RELAISVORRICHTUNG UND RELAISVERFAHREN
DISPOSITIF DE RELAIS ET PROCÉDÉ DE RELAIS

(30) Priority: 08.08.2016 JP 2016155665; 01.03.2017 JP 2017038755
(43) Date of publication of application: 19.06.2019
(73) Proprietor: Softbank Corp., Tokyo 105-7529 (JP)
(72) Inventor: NANRI, Masahiko, Tokyo 105-7317 (JP); YOSHIMURA, Takayuki, Tokyo 105-7317 (JP); NOMACHI, Masanori, Tokyo 105-7317 (JP); TAKII, Takanori, Tokyo 105-7317 (JP); TAKAGI, Jumpei, Tokyo 105-7317 (JP)
(74) Representative: Würmser, Julian
(86) International application number: PCT/JP2017/020361
(87) International publication number: WO 2018/029949

(56) References cited:
- EP-A1- 2 400 676
- CN-A- 102 404 820
- JP-A- 2011 004 376
- ZTE: 'The Stage-3 Procedure Description of DeNB SI Update' 3GPP TSG-RAN WG2#71 R2-104649, [Online] XP050449929 Retrieved from the Internet: <URL:http://www.3gpp.org/ftp/tsg _ran/ WG2_RL2/TSGR2_71/Docs/R2-104649.zip> [retrieved on 2017-07-10]

## Description

### TECHNICAL FIELD

The present invention relates to a relay apparatus and relay method for relaying radio communication between a macro cell base station and terminal devices.

### BACKGROUND ART

Regarding communication for which a conventional fixed-line-compatible femto cell base station is used, communication services are provided by using fixed lines such as a public telephone network as backhaul (for example, see PTL 1). However, when the fixed lines are used as the backhaul as in PTL 1, this causes problems in that it takes time to install the fixed lines and large amounts of running costs are required for the fixed lines. In order to solve the problems in the femto cell communication using these fixed lines, it is possible to use a radio-communication-compatible femto cell base station for which radio communication using, for example, a macro cell base station is used as the backhaul (hereinafter referred to as the "relay apparatus" in order to distinguish it from the conventional fixed-line-compatible femto cell base station).

### CITATION LIST

### PATENT LITERATURE

PTL 1: Japanese Patent No. 5456874

Patent application EP 2 400 676 A1 aims to disclose a Relay-Node (RN), a Donor-eNB and a method for the RN to receive and send system information, which avoid a conflict between simultaneously receiving system information by the RN from the donor-eNB and sending system information to a UE by the RN. The method comprises: setting an offset between a radio frame border of the RN and a radio frame border of a Donor-eNB by the Donor-eNB or the RN itself, so that the radio frame border of the RN is staggered from the radio frame border of the Donor-eNB; receiving and sending system information by the RN according to a sending period specified in a Long Term Evolution (LTE); so as to avoid a conflict between receiving and sending the system information by the RN.

Patent application CN 102 404 820 A aims to disclose a relay node (RN) and a method for achieving access control thereof. The method comprises: the RN obtains access control information of a subdistrict controlled by a host base station (DeNB) through a special signal or a system message; and the RN adopts the same access control strategy as the DeNB to perform access control on user equipment (UE) in a covered subdistrict. The RN can immediately take corresponding measures to avoid UE in a subdistrict controlled by the RN being connected into a network through the RN after the DeNB implements the access control so that network side load control or network maintenance can be smoothly achieved.

Patent application JP 2011 004376 A aims to disclose restricting a relay node while taking an actual operation environment into consideration by a mobile communication method including a process A in which a radio base station DeNB reports access restriction information, and a process B in which the relay node RN determines whether to transmit "RRC Connection Request" based upon an access class set in the access restriction information. In the process B, when an access class for the relay node is set in the access restriction information, the relay node RN determines whether to transmit "RRC Connection Request" to the radio base station DeNB based upon a parameter described in the access restriction information.

### SUMMARY OF THE INVENTION

### TECHNICAL PROBLEM

Meanwhile, when the radio communication is used as the backhaul, the macro cell base station treats the relay apparatus the same as a terminal device such as a mobile unit. Therefore, for example, when the macro cell base station imposes a cell restriction to restrict the quantity of terminal devices existing in a service area of a cell due to the occurrence of congestion, the relay apparatus also becomes a target of the restriction just like terminal devices. However, if the relay apparatus is restricted, all the terminal devices which exist in a service area within a communication-enabled range formed by the relay apparatus will be restricted and the fairness of the radio communication between the macro cell base station and the terminal devices will be impaired.

The present invention was devised in light of the above-described circumstances and it is an object of the invention to provide a relay apparatus capable of maintaining fairness of radio communication between a macro cell base station and terminal devices.

### SOLUTION TO PROBLEM

The present invention provides a relay apparatus in accordance with independent claim 1 and a corresponding relay method for relaying radio communication between one or more terminal devices and a macro cell base station in accordance with independent claim 3. A preferred embodiment of the invention is reflected in dependent claim 2.
(1-1) A relay apparatus for relaying radio communication between one or more terminal devices and a macro cell base station, wherein when the relay apparatus receives a cell restriction instruction from the macro cell base station to restrict a quantity of terminals capable of existing in a service area of a cell formed by the macro cell base station, the relay apparatus executes processing for avoiding cell restriction operation on itself and transfers the cell restriction instruction received from the macro cell base station to the terminal devices existing in the service area of the cell formed by the relay apparatus itself.
   If the relay apparatus has received an individual cell restriction instruction from a management server to restrict the quantity of terminals capable of existing in the service area of the cell formed by the relay apparatus itself in addition to the cell restriction instruction received from the macro cell base station when transmitting the cell restriction instruction to the terminal devices existing in the service area of the cell formed by the relay apparatus itself, the relay apparatus compares an ac-Barring Factor of the cell restriction instruction with an ac-Barring Factor of the individual cell restriction instruction, and transmits the individual cell restriction instruction received from the management server, or the cell restriction instruction received from the macro cell base station, whichever has a higher restriction level, to the terminal devices existing in the service area of the cell formed by the relay apparatus itself.
(1-2) A relay method for relaying radio communication between one or more terminal devices and a macro cell base station, wherein the relay method includes steps, when receiving a cell restriction instruction from the macro cell base station to restrict a quantity of terminals capable of existing in a service area of a cell formed by the macro cell base station, of: executing processing for avoiding cell restriction operation on itself; and transferring the cell restriction instruction received from the macro cell base station to the terminal devices existing in the service area of the cell formed by the relay apparatus itself.

If the relay apparatus has received an individual cell restriction instruction from a management server to restrict the quantity of terminals capable of existing in the service area of the cell formed by the relay apparatus itself in addition to the cell restriction instruction received from the macro cell base station when transmitting the cell restriction instruction to the terminal devices existing in the service area of the cell formed by the relay apparatus itself, the relay apparatus compares an ac-Barring Factor of the cell restriction instruction with an ac-Barring Factor of the individual cell restriction instruction, and transmits the individual cell restriction instruction received from the management server or the cell restriction instruction received from the macro cell base station, whichever has a higher restriction level, to the terminal devices existing in the service area of the cell formed by the relay apparatus itself.

The present invention may be configured as desired as follows.
(2) The avoiding processing is to determine to not execute the cell restriction operation in response to the cell restriction instruction received from the macro cell base station.
(3) The avoiding processing is to: prohibit generation of a random number to be used to judge whether the relay apparatus itself can exist in the service area or not; and execute the judgment of whether the relay apparatus itself can exist in the service area or not by using a specific preset value so that it will be determined that the relay apparatus itself can exist in the service area.
(4) The avoiding processing is to determine to not execute the cell restriction operation in response to the cell restriction instruction received from the macro cell base station by setting, in advance, its own priority for existing in the service area higher than priorities for the terminal devices existing in the service area.

### ADVANTAGEOUS EFFECTS OF THE INVENTION

When the relay apparatus according to the embodiment is employed, fairness of the radio communication between a donor base station and terminal devices can be maintained.

### BRIEF DESCRIPTION OF DRAWINGS

[Fig. 1] Fig. 1 is a configuration diagram of a mobile communications system including a relay apparatus according to an embodiment of the present invention;
[Fig. 2] Fig. 2 is a schematic diagram for explaining the status of general cell restrictions;
[Fig. 3] Fig. 3 is a schematic diagram for explaining an example of the cell restrictions when a conventional relay apparatus exists in a service area;
[Fig. 4] Fig. 4 is a schematic diagram for explaining an example of the cell restrictions when the relay apparatus according to the embodiment exists in the service area;
[Fig. 5] Fig. 5 is a schematic diagram for explaining an example of the cell restrictions when the relay apparatus according to the embodiment exists in the service area;
[Fig. 6] Fig. 6 is a schematic diagram for explaining an example of the cell restrictions when the relay apparatus according to the embodiment exists in the service area;
[Fig. 7] Fig. 7 is a flowchart for explaining a processing sequence for a relay apparatus 20 with respect to a first technique;
[Fig. 8] Fig. 8 is a flowchart for explaining a processing sequence for the relay apparatus 20 with respect to a second technique;
[Fig. 9] Fig. 9 is a flowchart for explaining a processing sequence for the relay apparatus 20 with respect to a third technique;
[Fig. 10] Fig. 10 is a flowchart for explaining a processing sequence for the relay apparatus 20 with respect to a fourth technique; and
[Fig. 11] Fig. 11 is a schematic diagram for explaining an example of the cell restrictions when the relay apparatus according to the embodiment exists in the service area.

### DESCRIPTION OF EMBODIMENTS

An embodiment according to the present invention will be explained with reference to the drawings. However, the embodiment explained below is just for illustration and is not intended to exclude applications of various variations or technologies which are not clearly specified below. In other words, the present invention can be implemented in various variations within the scope as defined by the appended claims. Furthermore, in the following descriptions of the series of drawings, the same or similar reference numerals are assigned to the same or similar parts.

### [Configuration of Mobile Communications System]

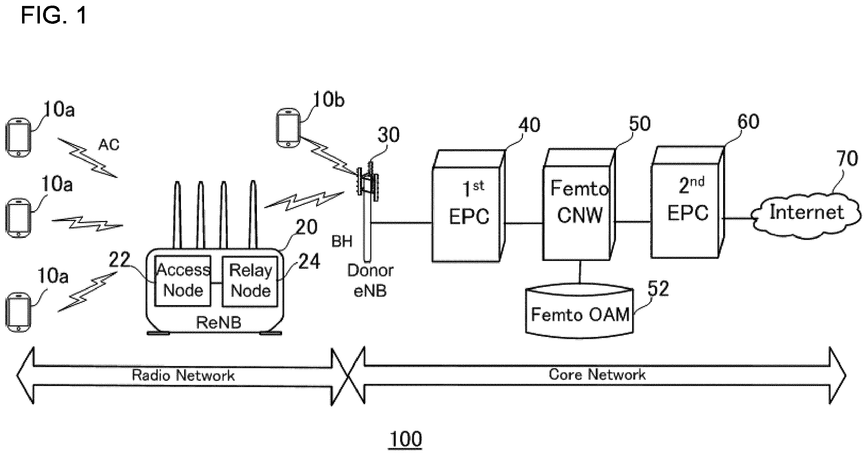

Fig. 1 illustrates a configuration diagram of a mobile communications system including a relay apparatus according to an embodiment of the present invention. A mobile communications system 100 according to this embodiment is exemplified as a mobile communications system according to the LTE scheme standardized by 3GPP and includes a radio network and a core network. The configuration of the radio network and the configuration of the core network will be sequentially explained below.

### (Configuration of Radio Network)

Referring to Fig. 1, the mobile communications system 100 includes terminal devices 10, a relay apparatus 20, and a donor base station (macro cell base station) 30 as the configuration relating to the radio network. Incidentally, the radio network is called E-UTRAN (Evolved Universal Terrestrial Radio Access Network) according to the LTE scheme.

The terminal device 10 is a mobile communications terminal such as a smartphone or a cell phone and is also called UE (User Equipment). Fig. 1 shows terminal devices 10a which exist in a service area of a cell (communication-enabled range) formed by the relay apparatus 20 and are connected to the relay apparatus 20, and a terminal device 10b which exists in a service area of a cell formed by the donor base station 30 and is connected to the donor base station 30. The terminal devices 10a and the terminal device 10b will be collectively referred to as the terminal devices 10.

The relay apparatus 20 is also called a ReNB (Repeater type eNode B) and constitutes one node in the radio network.

The relay apparatus 20 is configured by including an access node 22 and a relay node 24.

The access node 22 is also called a femto base station, establishes radio communication with the terminal device 10a, and provides the terminal device 10a with packet communication services (such as voice packet communication services and multimedia services). The radio communication between the access node 22 and the terminal device 10a is also called an access link. The cell size of a cell formed by the access node 22 is on a smaller scale than that of the donor base station 30 and constructs a communication area with a radius ranging from several meters to several tens of meters.

The access node 22 establishes radio communication with the donor base station 30 via the relay node 24. The relay node 24 is also called a CPE (Customer Premises Equipment). The radio communication between the relay node 24 and the donor base station 30 is also called backhaul (BH: Backhaul).

Incidentally, the access node 22 and the relay node 24 may be configured as separate nodes. When they are configured as the separate nodes, the relay node 24 assumes a role of the relay apparatus according to the present invention.

The donor base station 30 is also called a Donor eNB (Donor eNode B) and establishes radio communication with the relay node 24. The donor base station 30 constructs a communication area with a radius ranging from several hundreds of meters to a dozen kilometers or so.

### (Configuration of Core Network)

Referring to Fig. 1, the mobile communications system 100 includes a first core network EPC (Evolved Packet Core) 40, a femto core network 50, and a second core network EPC 60. Incidentally, this embodiment will be explained as including the first core network EPC 40 and the second core network EPC 60; however, the mobile communications system 100 may be configured by one core network EPC.

The first core network EPC 40 is connected to, for example, the donor base station 30 and has a function implementing, via the donor base station 30, mobile management and authentication of the individual terminal devices 10, and managing processing for setting packet communication data paths and a function implementing quality control in the radio network.

The femto core network 50 is a network that performs various management relating to the relay apparatus 20. The femto core network 50 is connected to, for example, a femto OAM (Femto Operations Administration Maintenance; management apparatus) 52 and has a function that operates, manages, and maintains the relay apparatus 20.

The second core network EPC 60 has, for example: a function that controls call connections to provide mobile communication services or controls the services; a function that serves as a switching station to receive calls from external networks to contract subscribers in the radio network or subscribers who are roaming in the radio network; a function that implements mobile management and authentication of the individual terminal devices 10 in the second core network EPC 60 and manages processing for setting packet communication data paths; and a function that performs communication policy control such as quality control and performs control pursuant to billing rules.

### [Regarding Cell Restrictions]

Conventional cell restrictions will be explained before explaining cell restrictions executed by the mobile communications system 100 according to this embodiment.

For example, when congestion or the like occurs in a mobile communications system according to the LTE scheme standardized by 3GPP, a donor base station (macro cell base station) is configured to transmit broadcast information including cell restriction instructions such as SIB1 (System Information Block Type 1) and SIB2 (System Information Block Type2) to all terminals existing in a service area of its own station's cell and restrict the quantity of the terminals capable of existing in the service area of its own station by using restriction parameters included in SIB1 and SIB2.

There is, for example, "cellBarred" as a restriction parameter included in SIB1. "Barred" or "not Barred," indicating whether the cell of the donor base station is restricted or not, is stored in "cellBarred."

There is, for example, "ac-Barring Factor" as a restriction parameter included in SIB2. A value corresponding to a restriction rate when restricting a terminal is stored in "ac-Barring Factor." For example, when the restriction rate is 30%, "p70" indicative of "0.70" is stored; when the restriction rate is 40%, "p60" indicative of "0.60" is stored; and when the restriction rate is 60%, "p40" indicative of "0.40" is stored.

When the terminal device 10 receives the broadcast information including SIB1 and SIB2 and "cellBarred" included in SIB1 is "barred," the terminal device 10 executes the cell restriction operation. The cell restriction operation includes, for example, generating a random number Rand with the range of [0,1), comparing the generated random number Rand with the value corresponding to "ac-Barring Factor" included in SIB2, and judging whether the terminal device can exist in the service area of the cell formed by the donor base station 30 or not. This judgment is performed as follows.
(1) When [the random number Rand < the value corresponding to ac-Barring Factor] is established, it is judged that the terminal device can exist in the service area.
(2) When [the random number Rand ≥ the value corresponding to ac-Barring Factor] is established, it is judged that the terminal device cannot exist in the service area.

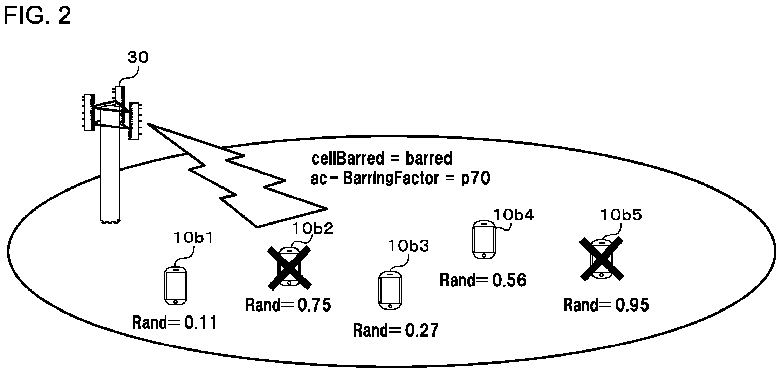

A specific explanation will be given by referring to Fig. 2. Fig. 2 is a diagram which illustrates the status of cell restrictions when "cellBarred" is "barred" indicating that the cell of the donor base station 30 is restricted, and "ac-Barring Factor" is "p70" indicating a 30% restriction rate.

In this case, the random number Rand of terminal device 10b1 is "0.11," the random number Rand of terminal device 10b2 is "0.75," the random number Rand of terminal device 10b3 is "0.27," the random number Rand of terminal device 10b4 is "0.56," and the random number Rand of terminal device 10b5 is "0.95."

Therefore, it is judged that the three terminal devices 10b1, 10b3, 10b4 which have generated the random numbers Rand that are less than the value "0.70" corresponding to "ac-Barring Factor=p70" can exist in the service area. Meanwhile, it is judged that the two terminal devices 10b2, 10b5 which have generated the random numbers Rand that are more than the value "0.70" corresponding to "ac-Barring Factor=p70" cannot exist in the service area.

By executing the cell restrictions, the terminal devices corresponding to 30% of the terminal devices which exist in the service area of the cell of the donor base station 30 are restricted as terminal devices which cannot exist in the service area.

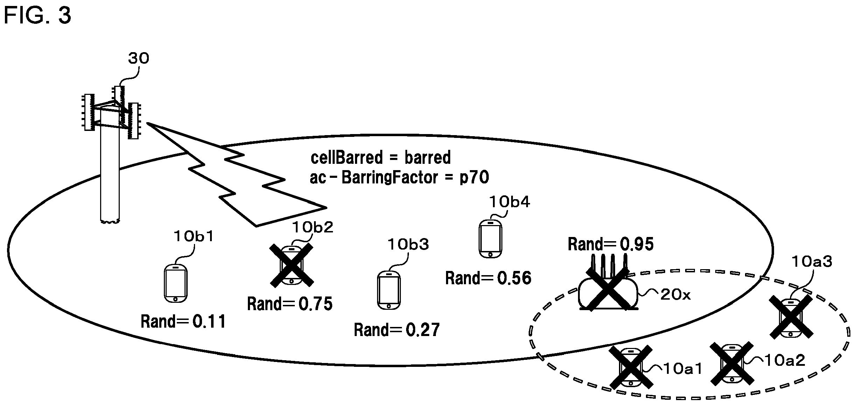

Fig. 3 is a diagram which illustrates an example of a case where when broadcast information similar to that in Fig. 2 is transmitted, a conventional relay apparatus 20x, instead of the terminal device 10b5 in Fig. 2, exists in the service area of the cell of the donor base station 30.

In this case, the random number Rand of the relay apparatus 20x is "0.95." The value "0.95" is more than the value "0.70" corresponding to "ac-Barring Factor=p70." Therefore, it is judged that the relay apparatus 20x cannot exist in the service area and becomes a restricted target.

Once the communication of the relay apparatus 20x is restricted, all terminal devices 10a1, 10a2, 10a3 which exist in the service area of the cell of the relay apparatus 20x become no longer capable of communication and each terminal device 10a1, 10a2, 10a3 can no longer benefit from services. Specifically speaking, in this case, the fairness of the radio communication with the terminal devices 10b1 to 10b4 which directly exist in the service area of the donor base station 30 will be impaired.

In order to avoid the above-described circumstance, the inventors of the present application have considered various techniques and have come to think of four techniques. These four techniques will be called a first technique, a second technique, a third technique, and a fourth technique and be sequentially explained below.

### (First Technique)

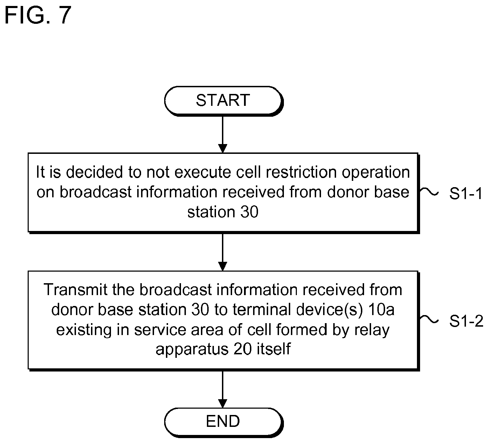

When receiving the broadcast information including SIB1 and SIB2 (cell restriction instructions), the relay apparatus 20 according to the first technique proceeds with processing in accordance with, for example, the procedures illustrated in Fig. 7.
(S1-1) It is determined to not execute the aforementioned cell restriction operation in response to the broadcast information including SIB1 and SIB2 received from the donor base station 30.
   In other words, even if "cellBarred" included in SIB1 of the received broadcast information is "barred," the relay apparatus 20 does not generate the random number and does not perform the judgment on whether or not it can exist in the service area of the cell formed by the donor base station 30. As a result, the relay apparatus 20 remains to exist in the service area of the cell formed by the donor base station 30.
(S1-2) The relay apparatus 20 transmits (including transfer) the broadcast information including SIB1 and SIB2 received from the donor base station 30 to the terminal devices 10a which exist in the service area of the cell formed by the relay apparatus 20 itself.

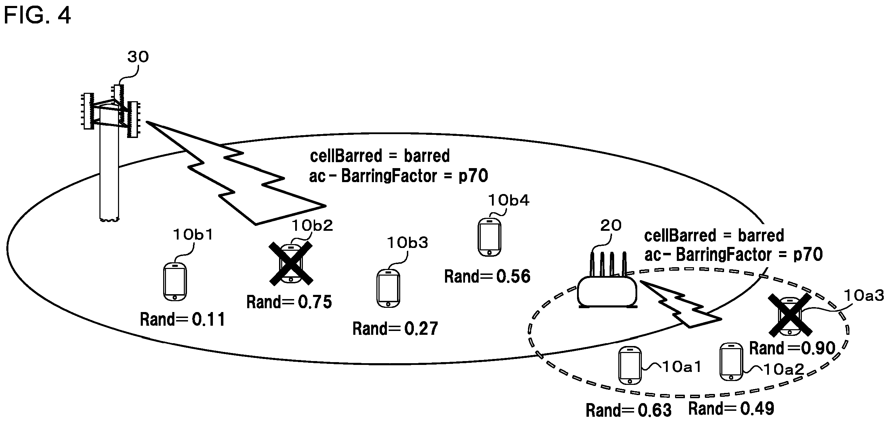

A specific explanation will be given by referring to Fig. 4. Fig. 4 is a diagram which illustrates an example of a case where when broadcast information similar to that in Fig. 3 is transmitted, the relay apparatus 20 which adopts the first technique, instead of the conventional relay apparatus 20x illustrated in Fig. 3, exists in the service area of the cell of the donor base station 30.

In this case, when the relay apparatus 20 receives the broadcast information including SIB1 and SIB2 from the donor base station 30, it does not generate the random number and does not perform the judgment on whether or not it can exist in the service area of the cell formed by the donor base station 30. Instead, the relay apparatus 20 transmits the broadcast information including SIB1 and SIB2 received from the donor base station 30 to all the terminal devices 10a1, 10a2, 10a3 which exist in the service area of the cell formed by the relay apparatus 20 itself.

In response, the terminal devices 10a1, 10a2, and 10a3 generate the random numbers based on the broadcast information including SIB1 and SIB2 received from the relay apparatus 20. Referring to Fig. 4, the random number Rand of the terminal device 10a1 is "0.63," the random number Rand of the terminal device 10a2 is "0.49," and the random number Rand of the terminal device 10a3 is "0.90."

Accordingly, it is judged that the two terminal devices 10a1 and 10a2 which have generated the random numbers Rand that are less than the value "0.70" corresponding to "ac-Barring Factor=p70" can exist in the service area. Meanwhile, it is judged that the terminal device 10a3 which has generated the random number Rand more than the value "0.70" corresponding to "ac-Barring Factor=p70" cannot exist in the service area.

By executing the cell restrictions in the above-described manner, the terminal device(s) corresponding to 30% of the terminal devices 10b which exist in the service area of the cell of the donor base station 30 and the terminal device(s) corresponding to 30% of the terminal devices 10a which exist in the service area of the cell of the relay apparatus 20 are restricted respectively as terminal devices which cannot exist in the service area. Therefore, the fairness of the radio communication between the donor base station 30 and the terminal devices 10 can be maintained.

### (Second Technique)

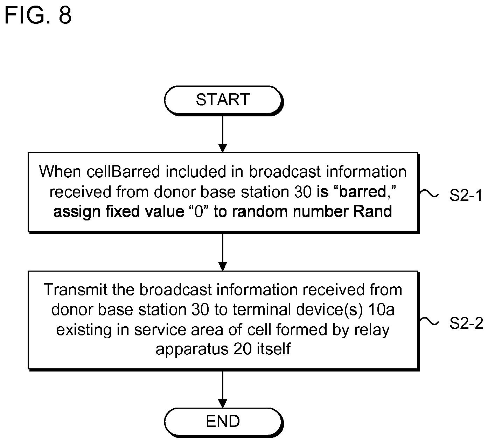

When receiving the broadcast information including SIB1 and SIB2, the relay apparatus 20 according to the second technique proceeds with processing in accordance with, for example, the procedures illustrated in Fig. 8.
(S2-1) When "cellBarred" included in SIB1 is "barred," the relay apparatus 20 does not generate the random number and assigns a fixed value "0" to the random number Rand. Then, the relay apparatus 20 compares the random number Rand, to which "0" is assigned, with the value corresponding to "ac-Barring Factor" included in SIB2 and judges whether it can exist in the service area of the cell formed by the donor base station 30. In this case, since the value of the random number Rand is fixed to "0," the value of the random number Rand always becomes smaller than the value corresponding to "ac-Barring Factor," and the judgment result indicating that it can exist in the service area will be always obtained.
   In other words, when "cellBarred" included in SIB1 of the received broadcast information is "barred," the relay apparatus 20 does not generate the random number and performs the judgment on whether or not it can exist in the service area of the cell formed by the donor base station 30 by using "0," which is a preset specified value, so that it will be judged that it can exist in the service area. Accordingly, it will be judged that the relay apparatus 20 can exist in the service area of the cell formed by the donor base station 30, so that the relay apparatus 20 remains to exist in the service area of the cell formed by the donor base station 30.
(S2-2) The relay apparatus transmits (including transfer) the broadcast information including SIB1 and SIB2 received from the donor base station 30 to the terminal devices 10a which exist in the service area of the cell formed by the relay apparatus 20 itself.

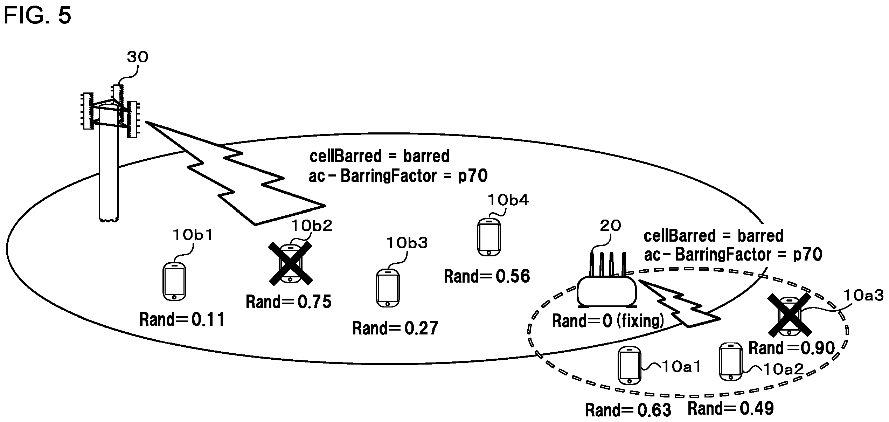

A specific explanation will be given by referring to Fig. 5. Fig. 5 is a diagram which illustrates an example of a case where when broadcast information similar to that in Fig. 3 is transmitted, the relay apparatus 20 which adopts the second technique, instead of the conventional relay apparatus 20x illustrated in Fig. 3, exists in the service area of the cell of the donor base station 30.

In this case, when the relay apparatus 20 receives the broadcast information including SIB1 and SIB2 from the donor base station 30, the relay apparatus 20 does not generate the random number, but assigns the fixed value "0" to the random number Rand. Since "0" is less than the value "0.70" corresponding to "ac-Barring Factor=p70," it is judged that the relay apparatus 20 can exist in the service area of the cell of the donor base station 30.

Furthermore, the relay apparatus 20 transmits the broadcast information including SIB1 and SIB2 received from the donor base station 30 to all the terminal devices 10a1, 10a2, 10a3 which exist in the service area of the cell formed by the relay apparatus 20 itself.

In response, the terminal devices 10a1, 10a2, and 10a3 generate random numbers based on the broadcast information including SIB1 and SIB2 received from the relay apparatus 20. Referring to Fig. 5, the random number Rand of the terminal device 10a1 is "0.63," the random number Rand of the terminal device 10a2 is "0.49," and the random number Rand of the terminal device 10a3 is "0.90."

Accordingly, it is judged that the two terminal devices 10a1 and 10a2 which have generated the random numbers Rand that are less than the value "0.70" corresponding to "ac-Barring Factor=p70" can exist in the service area. Meanwhile, it is judged that the terminal device 10a3 which has generated the random number Rand more than the value "0.70" corresponding to "ac-Barring Factor=p70" cannot exist in the service area.

By executing the cell restrictions in the above-described manner, the terminal device(s) corresponding to 30% of the terminal devices 10b which exist in the service area of the cell of the donor base station 30 and the terminal device(s) corresponding to 30% of the terminal devices 10a which exist in the service area of the cell of the relay apparatus 20 are restricted respectively as terminal devices which cannot exist in the service area. Therefore, the fairness of the radio communication between the donor base station 30 and the terminal devices 10 can be maintained.

### (Third Technique)

The relay apparatus 20 according to the third technique is based on the premise that any one or more of "11" to "15" is preset as an access class (AC) as described later.

The access class herein used is priority identification information that is set to terminals such as the terminal device 10 and the relay apparatus 20 and is information assigned to each terminal by operating personnel or the like in advance. The standard specifications for the 3GPP specify, as access codes, "0" to "9" which are assigned to general terminals, "10" which is assigned when reporting an emergency, and "11" to "15" which are assigned to special terminals.

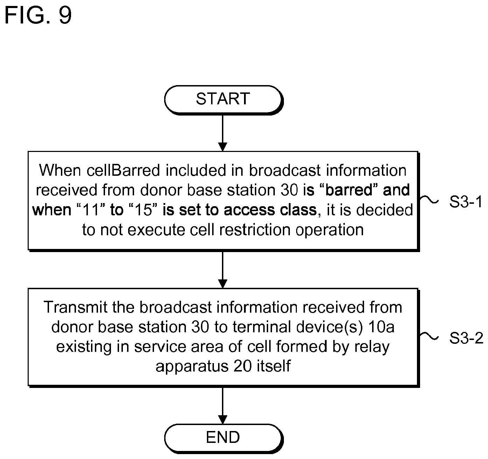

When receiving the broadcast information including SIB1 and SIB2 from the donor base station 30, the relay apparatus 20 according to the third technique proceeds with processing, for example, in accordance with the procedures illustrated in Fig. 9.
(S3-1) When "cellBarred" included in SIB1 is "barred," the relay apparatus 20 judges whether any one of "11" to "15" is set to the access class or not; and if any one of "11" to "15" is set to the access class, the relay apparatus 20 determines to not execute the aforementioned cell restriction operation.
   In other words, when any one of "11" to "15" is set to the access class, the relay apparatus 20 does not generate the random number and does not perform the judgment on whether or not it can exist in the service area of the cell formed by the donor base station 30 even if "cellBarred" included in SIB1 of the broadcast information received from the donor base station 30 is "barred." As a result, the relay apparatus 20 remains to exist in the service area of the cell formed by the donor base station 30.
(S3-2) The relay apparatus 20 transmits (including transfer) the broadcast information including SIB1 and SIB2 received from the donor base station 30 to the terminal devices 10a which exist in the service area of the cell formed by the relay apparatus 20 itself.

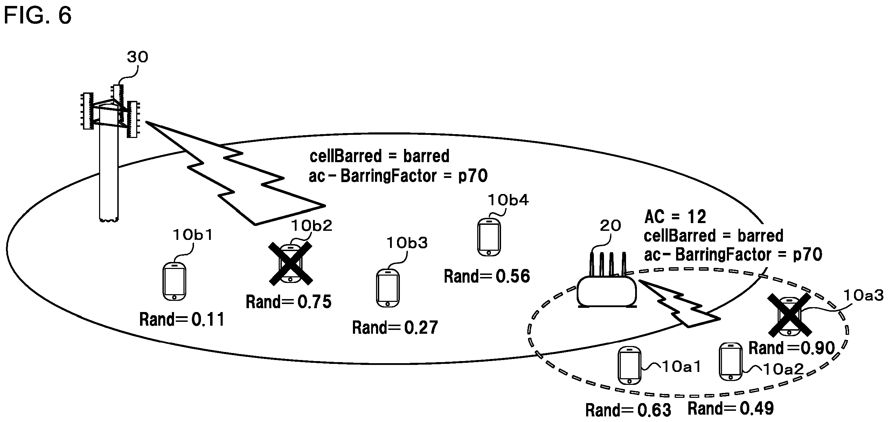

A specific explanation will be given by referring to Fig. 6. Fig. 6 is a diagram which illustrates an example of a case where when broadcast information similar to that in Fig. 3 is transmitted, and the relay apparatus 20 which adopts the third technique, instead of the conventional relay apparatus 20x illustrated in Fig. 3, exists in the service area of the cell of the donor base station 30.

In this case, "12" is set to the access class (AC) of the relay apparatus 20. So, when receiving the broadcast information including SIB1 and SIB2 from the donor base station 30, the relay apparatus 20 does not generate the random number and does not perform the judgment on whether or not it can exist in the service area of the cell formed by the donor base station 30. Instead, the relay apparatus 20 transmits the broadcast information including SIB1 and SIB2 received from the donor base station 30 to all the terminal devices 10a1, 10a2, and 10a3 which exist in the service area of the cell formed by the relay apparatus 20 itself.

In response, the terminal devices 10a1, 10a2, and 10a3 generate the random numbers on the basis of the broadcast information including SIB1 and SIB2 received from the relay apparatus 20. Referring to Fig. 6, the random number Rand of the terminal device 10a1 is "0.63," the random number Rand of the terminal device 10a2 is "0.49," and the random number Rand of the terminal device 10a3 is "0.90."

Accordingly, it is judged that the two terminal devices 10a1 and 10a2 which have generated the random numbers Rand that are less than the value "0.70" corresponding to "ac-Barring Factor=p70" can exist in the service area. Meanwhile, it is judged that the terminal device 10a3 which has generated the random number Rand more than the value "0.70" corresponding to "ac-Barring Factor=p70" cannot exist in the service area.

By executing the cell restrictions in the above-described manner, the terminal device(s) corresponding to 30% of the terminal devices 10b which exist in the service area of the cell of the donor base station 30 and the terminal device(s) corresponding to 30% of the terminal devices 10a which exist in the service area of the cell of the relay apparatus 20 are restricted respectively as terminal devices which cannot exist in the service area. Therefore, the fairness of the radio communication between the donor base station 30 and the terminal devices 10 can be maintained.

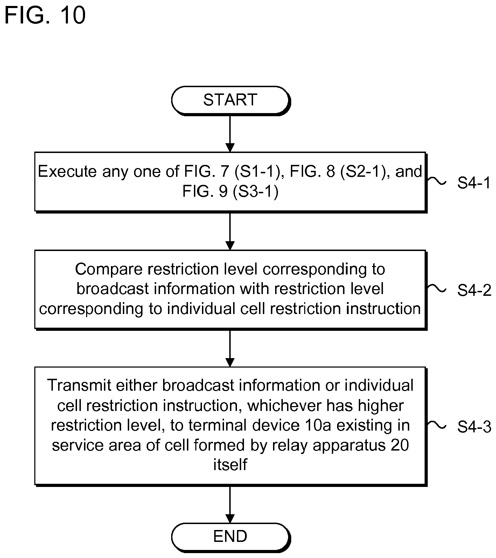

When the relay apparatus 20 according to the invention has received an individual cell restriction instruction from the femto OAM 52 in addition to the broadcast information, which has been received by the relay apparatus 20 according to, for example, the first technique, the second technique, or the third technique from the donor base station 30, when transmitting the broadcast information to the terminal devices 10a which exist in the service area of the cell formed by itself, the relay apparatus 20 proceeds with processing in accordance with the procedures illustrated in Fig. 10. The individual cell restriction instruction herein used is a cell restriction instruction which is a demand made by the femto OAM 52 to each relay apparatus 20 individually. This individual cell restriction instruction is an instruction to restrict the quantity of the terminal devices 10a capable of existing in the service area of the cell formed by the relay apparatus 20 itself, and includes a restriction rate which represents a restriction level by using a numerical value.
(S4-1) The relay apparatus 20 executes any one of the aforementioned (S1-1), the aforementioned (S2-1), or the aforementioned (S3-1).
   Accordingly, even if "cellBarred" included in SIB1 of the received broadcast information is "barred," the relay apparatus 20 remains to exist in the service area of the cell formed by the donor base station 30.
(S4-2) The relay apparatus 20 compares the restriction level corresponding to the broadcast information received from the donor base station 30 with the restriction level corresponding to the individual cell restriction instruction received from the femto OAM 52. The restriction rate determined by a value corresponding to "ac-Barring Factor" included in SIB2 is used as the restriction level.
(S4-3) As a result of the comparison in (S4-2) above, the relay apparatus 20 adopts whichever restriction level is higher, and transmits (including transfer) either the broadcast information or the individual cell restriction instruction corresponding to the adopted restriction level to the terminal devices 10a which exist in the service area of the cell formed by the relay apparatus 20 itself. In other words, the relay apparatus 20 transmits either the broadcast information or the individual cell restriction instruction, whichever has a higher restriction level, to the terminal devices 10a which exist in the service area of the cell formed by the relay apparatus 20 itself.

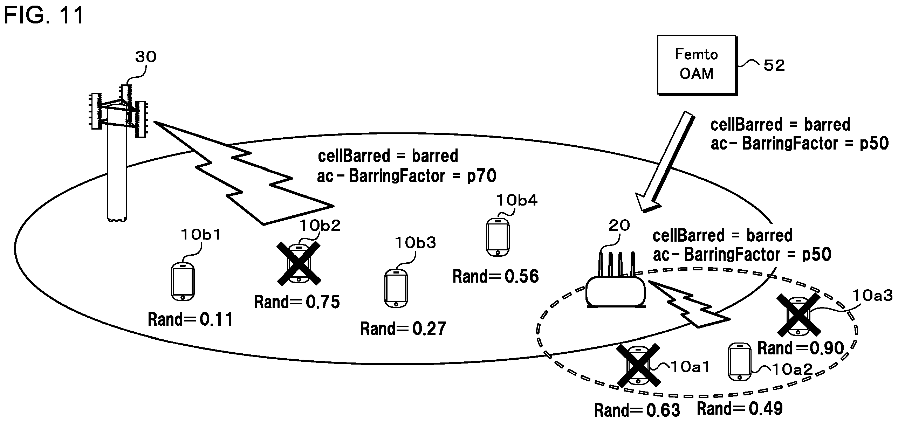

A specific explanation will be given by referring to Fig. 11. Fig. 11 is a diagram which illustrates an example of a case where when broadcast information similar to that in Fig. 3 is transmitted, the relay apparatus 20 according to the invention, instead of the conventional relay apparatus 20x illustrated in Fig. 3, exists in the service area of the cell of the donor base station 30.

In this case, when receiving the broadcast information including SIB1 and SIB2 from the donor base station 30, the relay apparatus 20 executes any one of the aforementioned (S1-1), the aforementioned (S2-1), or the aforementioned (S3-1). Then, the relay apparatus 20 compares the restriction level (30% restriction rate) corresponding to the broadcast information received from the donor base station 30 with the restriction level (50% restriction rate) corresponding to the individual cell restriction instruction received from the femto OAM 52.

As a result of the comparison of the restriction levels, the relay apparatus 20 finds that the restriction level corresponding to the individual cell restriction instruction is higher. So, the relay apparatus 20 transmits the individual cell restriction instruction received from the femto OAM 52 to all the terminal devices 10a1, 10a2, and 10a3 which exist in the service area of the cell formed by the relay apparatus 20 itself.

In response, the terminal devices 10a1, 10a2, and 10a3 generate the random numbers on the basis of the individual cell restriction instruction received from the relay apparatus 20. Referring to Fig. 11, the random number Rand of the terminal device 10a1 is "0.63," the random number Rand of the terminal device 10a2 is "0.49," and the random number Rand of the terminal device 10a3 is "0.90."

Accordingly, it is judged that the one terminal device 10a2 which has generated the random number Rand that is less than the value "0.50" corresponding to "ac-Barring Factor=p50" can exist in the service area. Meanwhile, it is judged that the terminal devices 10a1 and 10a3 which have generated the random numbers Rand more than the value "0.50" corresponding to "ac-Barring Factor=p50" cannot exist in the service area.

By executing the cell restrictions in the above-described manner, the terminal device(s) corresponding to 30% of the terminal devices 10b which exist in the service area of the cell of the donor base station 30 and the terminal device(s) corresponding to 50% of the terminal devices 10a which exist in the service area of the cell of the relay apparatus 20 are restricted respectively as terminal devices which cannot exist in the service area. Such cell restrictions are particularly effective under the circumstance where, for example, the quantity of the terminal devices 10a which exist in the service area of the cell of the relay apparatus 20 is relatively larger than the quantity of the terminal devices 10b which exist in the service area of the cell of the donor base station 30. This is because the possibility of avoiding a congested state can be enhanced by increasing only the restriction rate on the terminal devices 10a which exist in the service area of the cell of the relay apparatus 20.

Therefore, under the circumstance where the cell of a specific relay apparatus 20 is particularly crowded, it becomes possible to avoid the congested state and maintain the fairness of the radio communication between the donor base station 30 and the terminal devices 10 by transmitting the individual cell restriction instruction to the relay apparatus 20 and increasing only the restriction rate of the terminal devices 10a which exist in the service area of the cell of the relay apparatus 20.

Incidentally, regarding the above-described fourth technique, the restriction level corresponding to the broadcast information received from the donor base station 30 is compared with the restriction level corresponding to the individual cell restriction instruction received from the femto OAM 52; however, in an example useful for understanding the present invention, the comparison of the restriction levels may be omitted. For example, when receiving the individual cell restriction instruction from the femto OAM 52, the relay apparatus 20 may prioritize that individual cell restriction instruction and transmit the individual cell restriction instruction to all the terminal devices 10a1, 10a2, and 10a3 which exist in the service area of the cell formed by the relay apparatus 20 itself.

Accordingly, by setting the restriction level which can avoid the congestion efficiently in the individual cell restriction instruction and transmitting that individual cell restriction instruction to the specific relay apparatus 20, it becomes possible to consider the balance between the quantity of the terminal devices 10b which exist in the service area of the cell of the donor base station 30 and the quantity of the terminal devices 10a which exist in the service area of the cell of the relay apparatus 20 and to apply the restrictions according to the respective circumstances. Therefore, it becomes possible to avoid the congested state efficiently and maintain the fairness of the radio communication between the donor base station 30 and the terminal devices 10.

Furthermore, regarding the aforementioned fourth technique or a variation example, a setting may be set so that whether or not to adopt the individual cell restriction instruction received from the femto OAM 52 can be set. In this case, for example, when the setting is set to adopt the individual cell restriction instruction with respect to the aforementioned first technique, the aforementioned second technique, or the aforementioned third technique, the relay apparatus 20 may proceed with the processing in accordance with the procedures for the aforementioned fourth technique or its variation example.

### [Advantageous Effects of This Embodiment]

When the relay apparatus 20 according to the embodiment as explained above receives the broadcast information including SIB1 and SIB2 (the cell restriction instructions) from the donor base station 30, the relay apparatus 20 can execute processing for avoiding the cell restriction operation on itself and transmit the broadcast information including SIB1 and SIB2 received from the donor base station 30 to the terminal devices 10a which exist in the service area of the cell formed by itself.

Furthermore, when the relay apparatus 20 receives the individual cell restriction instruction from the femto OAM 52 in addition to the broadcast information received from the donor base station 30, it can also transmit the individual cell restriction instruction received from the femto OAM 52 to the terminal devices 10a which exist in the service area of the cell formed by itself.

Accordingly, when the cell restrictions occur at the donor base station 30, it is possible to restrict the terminal device 10a, which exists in the service area of the cell formed by the donor base station 30, according to the restriction rate, maintain the relay apparatus 20 to exist in the service area of the cell formed by the donor base station 30, and restrict the terminal device 10b, which exists in the service area of the cell formed by the relay apparatus 20, according to the restriction rate.

Therefore, when the relay apparatus 20 according to the embodiment is employed, fairness of the radio communication between the donor base station 30 and the terminal devices 10 can be maintained.

### [Other Embodiments]

The present invention has been described by referring to the aforementioned embodiment; however, it should not be understood that the descriptions and diagrams which constitute part of this disclosure limit this invention. This disclosure should make various substitute embodiments, examples, and operation technologies apparent to those skilled in the art.

For example, the mobile communications system according to the LTE scheme was taken as an example and explained in the aforementioned embodiment; however, the present invention is not limited to this example and can be also applied to other communication schemes and communication schemes to be established in the future.

### INDUSTRIAL APPLICABILITY

The relay apparatus according to the present invention is suited for maintaining fairness of the radio communication between a macro cell base station and terminal devices.

### REFERENCE SIGNS LIST

- 10: terminal device
- 20: relay apparatus
- 22: access node
- 24: relay node
- 30: donor base station (macro cell base station)
- 40: first core network EPC
- 50: femto core network
- 52: femto OAM
- 60: second core network EPC
- 100: mobile communications system

## Claims

1. A relay apparatus (20) comprising an access node (22) for a femto cell and a relay node (24) for providing backhaul to a macro cell base station (30),
wherein when the relay apparatus (20) receives a cell restriction instruction from the macro cell base station (30) to restrict a quantity of terminals capable of existing in a service area of a cell formed by the macro cell base station (30), the relay apparatus (20) executes processing for avoiding cell restriction operation on itself and transfers the cell restriction instruction received from the macro cell base station (30) to the terminal devices (10a) existing in a service area of a cell formed by the relay apparatus (20) itself;
wherein if the relay apparatus (20) has received an individual cell restriction instruction from a management server to restrict the quantity of terminals capable of existing in the service area of the cell formed by the relay apparatus (20) itself in addition to the cell restriction instruction received from the macro cell base station (30) when transmitting the cell restriction instruction to the terminal devices (10a) existing in the service area of the cell formed by the relay apparatus (20) itself, the relay apparatus (20) compares an ac-Barring Factor of the cell restriction instruction with an ac-Barring Factor of the individual cell restriction instruction, and transmits the individual cell restriction instruction received from the management server, or the cell restriction instruction received from the macro cell base station (30), whichever has a higher restriction level, to the terminal devices (10a) existing in the service area of the cell formed by the relay apparatus (20) itself.

2. The relay apparatus (20) according to claim 1,
wherein processing for avoiding cell restriction operation on itself executed by the relay apparatus (20) is to: prohibit generation of a random number to be used to judge whether the relay apparatus (20) itself can exist in the service area or not; and execute the judgment of whether the relay apparatus (20) itself can exist in the service area or not by using a specific preset value so that it will be determined that the relay apparatus (20) itself can exist in the service area;
wherein the cell restriction operation includes: generating a random number to be used to judge whether the relay apparatus (20) itself can exist in the service area or not; comparing the random number with a value corresponding to a restriction rate included in the cell restriction instruction; and judging whether the relay apparatus (20) itself can exist in the service area with respect to the cell formed by the macro cell base station (30).

3. A relay method for relaying radio communication between one or more terminal devices (10a) and a macro cell base station (30) performed by a relay apparatus (20) comprising an access node (22) for a femto cell and a relay node (24) for providing backhaul to the macro cell base station (30), the relay method comprising steps, when receiving a cell restriction instruction from the macro cell base station (30) to restrict a quantity of terminals capable of existing in a service area of a cell formed by the macro cell base station (30), of:
executing processing for avoiding cell restriction operation on itself; and
transferring the cell restriction instruction received from the macro cell base station (30) to the terminal devices (10a) existing in a service area of a cell formed by the relay apparatus (20) itself;
wherein if the relay apparatus (20) has received an individual cell restriction instruction from a management server to restrict the quantity of terminals capable of existing in the service area of the cell formed by the relay apparatus (20) itself in addition to the cell restriction instruction received from the macro cell base station (30) when transmitting the cell restriction instruction to the terminal devices (10a) existing in the service area of the cell formed by the relay apparatus (20) itself, the relay apparatus (20) compares an ac-Barring Factor of the cell restriction instruction with an ac-Barring Factor of the individual cell restriction instruction, and transmits the individual cell restriction instruction received from the management server or the cell restriction instruction received from the macro cell base station (30), whichever has a higher restriction level, to the terminal devices (10a) existing in the service area of the cell formed by the relay apparatus (20) itself.

## Patentansprüche

1. Relaisvorrichtung (20), einen Zugangsknoten (22) zu einer Femtozelle und einen Relaisknoten (24) umfassend, um einen Rücktransport zu einer Makrozellenbasisstation (30) bereitzustellen,
wobei, wenn die Relaisvorrichtung (20) eine Zellenbeschränkungsanweisung von der Makrozellenbasisstation (30) erhält, um eine Menge an Endgeräten zu beschränken, die in einem Servicebereich einer durch die Makrozellenbasisstation (30) gebildeten Zelle vorhanden sein können, die Relaisvorrichtung (20) eine Verarbeitung ausführt, um einen Zellenbeschränkungsvorgang an sich selbst zu vermeiden, und die Zellenbeschränkungsanweisung, die sie von der Makrozellenbasisstation (30) erhalten hat, an die Endgerätevorrichtungen (10a) überträgt, die in einem Servicebereich einer Zelle vorhanden sind, die durch die Relaisvorrichtung (20) selbst gebildet ist;
wobei, wenn die Relaisvorrichtung (20) eine einzelne Zellenbeschränkungsanweisung von einem Management-Server, um die Menge an Endgeräten zu beschränken, die in dem Servicebereich der Zelle vorhanden sein können, die durch die Relaisvorrichtung (20) selbst gebildet ist, zusätzlich zu der Zellenbeschränkungsanweisung, die sie von der Makrozellenbasisstation (30) erhalten hat, erhalten hat, wenn sie die Zellenbeschränkungsanweisung an die Endgerätevorrichtungen (10a) überträgt, die in dem Servicebereich der Zelle vorhanden sind, die durch die Relaisvorrichtung (20) selbst gebildet ist, die Relaisvorrichtung (20) einen ac-Sperrfaktor der Zellenbeschränkungsanweisung mit einem ac-Sperrfaktor der einzelnen Zellenbeschränkungsanweisung vergleicht und die einzelne Zellenbeschränkungsanweisung, die sie vom Management-Server erhalten hat, oder die Zellenbeschränkungsanweisung, die sie von der Makrozellenbasisstation (30) erhalten hat, welches Element auch immer einen höheren Beschränkungsgrad hat, an die Endgerätevorrichtungen (10a) überträgt, die in dem Servicebereich der Zelle vorhanden sind, die durch die Relaisvorrichtung (20) selbst gebildet ist.

2. Relaisvorrichtung (20) nach Anspruch 1,
wobei die durch die Relaisvorrichtung (20) ausgeführte Verarbeitung, um einen Zellenbeschränkungsvorgang an sich selbst zu vermeiden, dazu bestimmt ist: eine Generierung einer Zufallszahl zu untersagen, die dazu verwendet werden soll, zu beurteilen, ob die Relaisvorrichtung (20) selbst in dem Servicebereich vorhanden sein kann oder nicht; und die Beurteilung, ob die Relaisvorrichtung (20) selbst in dem Servicebereich vorhanden sein kann oder nicht, unter Verwendung eines spezifischen Voreinstellungswerts auszuführen, so dass bestimmt wird, dass die Relaisvorrichtung (20) selbst in dem Servicebereich vorhanden sein kann;
wobei der Zellenbeschränkungsvorgang beinhaltet: eine Zufallszahl zu generieren, die dazu verwendet werden soll, zu beurteilen, ob die Relaisvorrichtung (20) selbst in dem Servicebereich vorhanden sein kann oder nicht, die Zufallszahl mit einem Wert zu vergleichen, der einer Beschränkungsrate entspricht, die in der Zellenbeschränkungsanweisung enthalten ist; und zu beurteilen, ob die Relaisvorrichtung (20) selbst in dem Servicebereich im Hinblick auf die Zelle vorhanden sein kann, die durch die Makrozellenbasisstation (30) gebildet ist.

3. Relaisverfahren, um eine Funkkommunikation zwischen einer oder mehreren Endgerätevorrichtung/en (10a) und einer Makrozellenbasisstation (30) zu vermitteln, die durch eine Relaisvorrichtung (20) erfolgt, die einen Zugangsknoten (22) zu einer Femtozelle und einen Relaisknoten (24) umfasst, um einen Rücktransport zur Makrozellenbasisstation (30) bereitzustellen,
wobei das Relaisverfahren, wenn eine Zellenbeschränkungsanweisung von der Makrozellenbasisstation (30) erhalten wird, um eine Menge an Endgeräten zu beschränken, die in einem Servicebereich einer durch die Makrozellenbasisstation (30) gebildeten Zelle vorhanden sein können, folgende Schritte umfasst:
eine Verarbeitung auszuführen, um einen Zellenbeschränkungsvorgang an sich selbst zu vermeiden; und
die von der Makrozellenbasisstation (30) erhaltene Zellenbeschränkungsanweisung an die Endgerätevorrichtungen (10a) zu übertragen, die in einem Servicebereich einer Zelle vorhanden sind, die durch die Relaisvorrichtung (20) selbst gebildet ist;
wobei, wenn die Relaisvorrichtung (20) eine einzelne Zellenbeschränkungsanweisung von einem Management-Server, um die Menge an Endgeräten zu beschränken, die in dem Servicebereich der Zelle vorhanden sein können, die durch die Relaisvorrichtung (20) selbst gebildet ist, zusätzlich zu der Zellenbeschränkungsanweisung, die sie von der Makrozellenbasisstation (30) erhalten hat, erhalten hat, wenn sie die Zellenbeschränkungsanweisung an die Endgerätevorrichtungen (10a) überträgt, die in dem Servicebereich der Zelle vorhanden sind, die durch die Relaisvorrichtung (20) selbst gebildet ist, die Relaisvorrichtung (20) einen ac-Sperrfaktor der Zellenbeschränkungsanweisung mit einem ac-Sperrfaktor der einzelnen Zellenbeschränkungsanweisung vergleicht und die einzelne Zellenbeschränkungsanweisung, die sie vom Management-Server erhalten hat, oder die Zellenbeschränkungsanweisung, die sie von der Makrozellenbasisstation (30) erhalten hat, welches Element auch immer einen höheren Beschränkungsgrad hat, an die Endgerätevorrichtungen (10a) überträgt, die in dem Servicebereich der Zelle vorhanden sind, die durch die Relaisvorrichtung (20) selbst gebildet ist.

## Revendications

1. Dispositif de relais (20) comprenant un nœud d'accès (22) pour une cellule femto et un nœud de relais (24) destiné à fournir un réseau de collecte à une station de base de macrocellule (30),
sachant que lorsque le dispositif de relais (20) reçoit une instruction de restriction de cellule depuis la station de base de macrocellule (30) pour restreindre une quantité de terminaux capables d'exister dans une aire de service d'une cellule formée par la station de base de macrocellule (30), le dispositif de relais (20) exécute un traitement destiné à éviter une opération de restriction de cellule sur lui-même et transfère l'instruction de restriction de cellule reçue depuis la station de base de macrocellule (30) aux dispositifs terminaux (10a) existant dans une aire de service d'une cellule formée par le dispositif de relais (20) lui-même ;
sachant que si le dispositif de relais (20) a reçu une instruction de restriction de cellule individuelle depuis un serveur de gestion pour restreindre la quantité de terminaux capables d'exister dans l'aire de service de la cellule formée par le dispositif de relais (20) lui-même en plus de l'instruction de restriction de cellule reçue depuis la station de base de macrocellule (30) lors de la transmission de l'instruction de restriction de cellule aux dispositifs terminaux (10a) existant dans l'aire de service de la cellule formée par le dispositif de relais (20) lui-même, le dispositif de relais (20) compare un facteur d'interdiction de classe d'accès (ac-*Barring*) de l'instruction de restriction de cellule avec un facteur d'interdiction de classe d'accès de l'instruction de restriction de cellule individuelle, et transmet l'instruction de restriction de cellule individuelle reçue depuis le serveur de gestion, ou l'instruction de restriction de cellule reçue depuis la station de base de macrocellule (30), selon celle qui présente un niveau de restriction plus élevé, aux dispositifs terminaux (10a) existant dans l'aire de service de la cellule formée par le dispositif de relais (20) lui-même.

2. Le dispositif de relais (20) selon la revendication 1,
sachant qu'un traitement destiné à éviter une opération de restriction de cellule sur lui-même exécuté par le dispositif de relais (20) consiste à : interdire la génération d'un nombre aléatoire devant être utilisé pour estimer si le dispositif de relais (20) lui-même peut exister dans l'aire de service ou non ; et exécuter l'action d'estimer si le dispositif de relais (20) lui-même peut exister dans l'aire de service ou non en utilisant une valeur de préréglage spécifique de sorte qu'il sera déterminé que le dispositif de relais (20) lui-même peut exister dans l'aire de service ;
sachant que l'opération de restriction de cellule inclut : la génération d'un nombre aléatoire à utiliser pour estimer si le dispositif de relais (20) lui-même peut exister dans l'aire de service ou non ; la comparaison du nombre aléatoire avec une valeur correspondant à un taux de restriction inclus dans l'instruction de restriction de cellule ; et l'action d'estimer si le dispositif de relais (20) lui-même peut exister dans l'aire de service par rapport à la cellule formée par la station de base de macrocellule (30).

3. Procédé de relais destiné à relayer une communication radio entre un ou plusieurs dispositifs terminaux (10a) et une station de base de macrocellule (30), effectué par un dispositif de relais (20) comprenant un nœud d'accès (22) pour une cellule femto et un nœud de relais (24) pour fournir un réseau de collecte à la station de base de macrocellule (30),
le procédé de relais comprenant, lors de la réception d'une instruction de restriction de cellule depuis la station de base de microcellule (30) pour restreindre une quantité de terminaux capables d'exister dans une aire de service d'une cellule formée par la station de base de microcellule (30), des étapes consistant à :
exécuter un traitement destiné à éviter une opération de restriction de cellule sur lui-même ; et
transférer l'instruction de restriction de cellule reçue depuis la station de base de microcellule (30) aux dispositifs terminaux (10a) existant dans une aire de service d'une cellule formée par le dispositif de relais (20) lui-même ;
sachant que si le dispositif de relais (20) a reçu une instruction de restriction de cellule individuelle depuis un serveur de gestion pour restreindre la quantité de terminaux capables d'exister dans l'aire de service de la cellule formée par le dispositif de relais (20) lui-même en plus de l'instruction de restriction de cellule reçue depuis la station de base de macrocellule (30) lors de la transmission de l'instruction de restriction de cellule aux dispositifs terminaux (10a) existant dans l'aire de service de la cellule formée par le dispositif de relais (20) lui-même, le dispositif de relais (20) compare un facteur d'interdiction de classe d'accès (ac-*Barring*) de l'instruction de restriction de cellule avec un facteur d'interdiction de classe d'accès de l'instruction de restriction de cellule individuelle, et transmet l'instruction de restriction de cellule individuelle reçue depuis le serveur de gestion ou l'instruction de restriction de cellule reçue depuis la station de base de macrocellule (30), selon celle qui présente un niveau de restriction plus élevé, aux dispositifs terminaux (10a) existant dans l'aire de service de la cellule formée par le dispositif de relais (20) lui-même.
